# EUROPEAN PATENT SPECIFICATION

(11) **EP 3 972 361 B1**
(45) Date of publication and mention of the grant of the patent: **07.02.2024**
(21) Application number: 19950780.7
(22) Date of filing: 30.10.2019
(51) Int. Cl.: H04W 72/04, H04W 28/06

(54) **WIRELESS COMMUNICATION METHOD AND TERMINAL DEVICE**
DRAHTLOSKOMMUNIKATIONSVERFAHREN UND ENDGERÄTEVORRICHTUNG
PROCÉDÉ DE COMMUNICATION SANS FIL ET DISPOSITIF TERMINAL

(43) Date of publication of application: 23.03.2022
(73) Proprietor: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN)
(74) Representative: Taor, Simon Edward William
(86) International application number: PCT/CN2019/114433
(87) International publication number: WO 2021/081824

(56) References cited:
- WO-A1-2018/232259
- US-A1- 2010 281 486
- US-A1- 2017 195 464
- US-A1- 2018 368 167
- OPPO: "LCP for multiple grants", 3GPP DRAFT; R2-1707740 - LCP FOR MULTIPLE GRANTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Berlin, Germany; 20170821 - 20170825 20 August 2017 (2017-08-20), XP051317701, Retrieved from the Internet: URL:http://www.3gpp.org/ftp/Meetings_3GPP_ SYNC/RAN2/Docs/ [retrieved on 2017-08-20]
- Anonymous: "3rd Generation Partnership Project; Technical Specification Group Radio Access Network; NR; Medium Access Control (MAC) protocol specification (Release 15)", 3GPP Standard; Technical Specification; 3GPP TS 38.321, 3rd Generation Partnership Project (3GPP), Mobile Competence Centre ; 650, route des Lucioles ; F-06921 Sophia-Antipolis Cedex ; France, no. V15.3.0, 25 September 2018 (2018-09-25), pages 1-76, XP051487371, Mobile Competence Centre ; 650, route des Lucioles ; F-06921 Sophia-Antipolis Cedex ; France

## Description

### BACKGROUND OF THE DISCLOSURE

### 1. Field of the Disclosure

Embodiments of the present application relate to communication technologies, and more particularly to a wireless communication method and a terminal device.

### 2. Description of the Related Art

In the 5-Generation (5G) New Radio (NR) mobile communication technology, the configuration/restriction of mapping of logical channels to resources is introduced in order to better provide a guarantee of transmission for ultra-reliable low-latency services, especially to guarantee reliable transmission. The configuration/restriction is used to ensure the multiplexing of data of specific logical channels onto specific resources, preventing data of other logical channels from occupying the specific resources. However, in a situation that there are resources left after specific resources are used for transmission based on the configuration/restriction of mapping of logical channels to resources, how to use the remaining resources, or in a situation that the configuration/restriction of mapping of logical channels to resources is not configured, how to use the resources more efficiently, is a crucial problem that needs to be solved.

US 2010/281486A1 and R2-1707740 (OPPO: "LCP for multiple grants", 3GPP DRAFT) are relevant background arts in this field.

### SUMMARY

The invention is set out in the appended sets of claims.

Provided in the embodiments of the present application are a wireless communication method and a terminal device, which can use resources as much as possible to transmit more valid data, thus increasing the utilization rate of resources.

In a first aspect, a wireless communication method is provided, and the method includes:
determining, by a terminal device, that a first resource is available; and
when a first condition is met, performing, by the terminal device, media access control (MAC) physical data unit (PDU) packaging or information multiplexing on the first resource,
wherein the first resource is a configured grant (CG) resource or a dynamic grant (DG) resource; the first condition is indicated or configured by a network device;
wherein the first condition is that correspondence between logical channels and resources is not configured,
wherein the performing, by the terminal device, MAC PDU packaging or information multiplexing on the first resource includes:
multiplexing, by the terminal device, onto the first resource the logical channel that meets logical channel prioritization (LCP) mapping condition; or
determining, by the terminal device, to ignore the first resource,
wherein the LCP mapping condition includes at least one of the followings:
allowed subcarrier spacing (SCS) list;
maximum physical uplink shared channel (PUSCH) duration;
allowed CG type 1; and
allowed serving cells,
wherein a CG type 1 resource is a CG resource that is activated as along as being configured by radio resource control (RRC).

In a second aspect, a terminal device is provided, which includes a processor and a memory. The memory is configured to store a computer program, and the processor is configured to call and run the computer program stored in the memory to implement the method of the first aspect or the method of any implementation of the first aspect.

By using the technical solution of the foregoing first aspect, in a situation that the first condition is met, the terminal device performs the MAC PDU packaging or information multiplexing on the first resource. This avoids a problem that the terminal device does not know how to deal with the situation when the first condition is met. In such a way, the resources can be used more efficiently.

### BRIEF DESCRIPTION OF THE DRAWINGS

FIG. 1 is a schematic diagram illustrating a communication system framework provided in an embodiment of the present application.
FIG. 2 is a schematic flowchart of a wireless communication method provided in an embodiment of the present application.
FIG. 3 is a schematic flowchart of another wireless communication method provided in an embodiment of the present application.
FIG. 4 is a schematic block diagram illustrating a terminal device provided in an embodiment of the present application.
FIG. 5 is a schematic block diagram illustrating another terminal device provided in an embodiment of the present application.
FIG. 6 is a schematic block diagram illustrating a communication device provided in an embodiment of the present application.
FIG. 7 is a schematic block diagram illustrating a device provided in an embodiment of the present application.
FIG. 8 is a schematic block diagram illustrating a communication system provided in an embodiment of the present application.

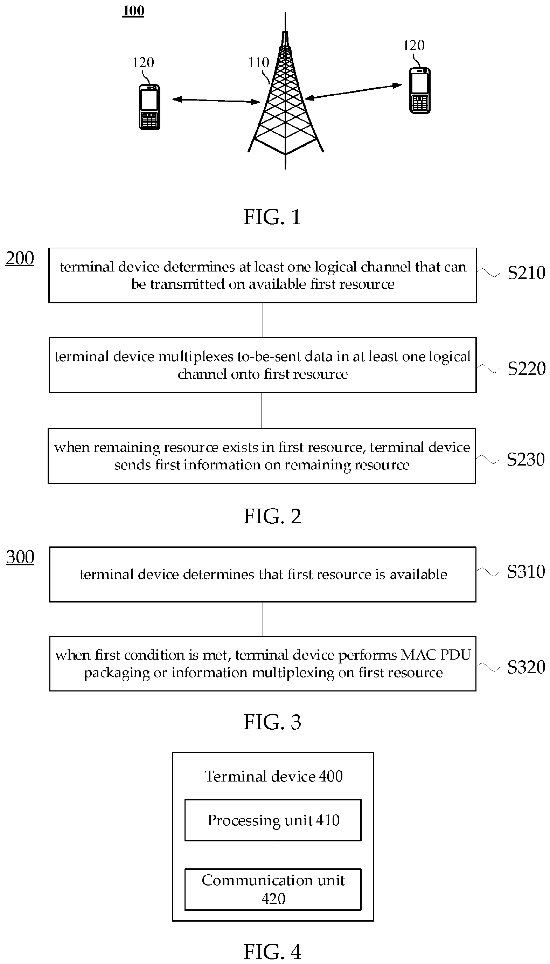

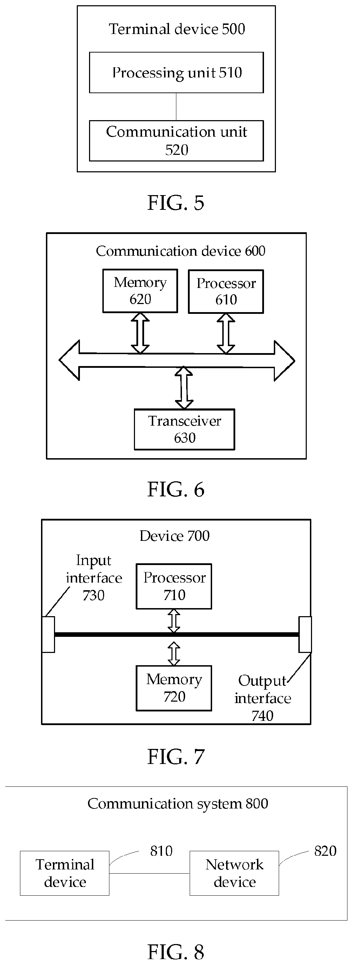

It is noted that FIGs. 2 and 4 do not form part of the invention but are useful for understanding the invention, and the invention is mainly illustrated using FIGs. 3 and 5.

### DETAILED DESCRIPTION OF THE EMBODIMENTS

The embodiments of the present application may be applied to various communication systems, such as, a Global System of Mobile Communication (GSM) system, a Code Division Multiple Access (CDMA) system, a Wideband Code Division Multiple Access (WCDMA) system, a General Packet Radio Service (GPRS), a Long Term Evolution (LTE) system, an Advanced long term evolution (LTE-A) system, a New Radio (NR) system, and an evolution system of a NR system, an LTE-based access to unlicensed spectrum (LTE-U) system, a NR-based access to unlicensed spectrum (NR-U) system, a universal mobile telecommunications system (UMTS), Wireless Local Area Network (WLAN), Wireless Fidelity (WiFi) and a next generation communication system, or other communication systems.

In general, traditional communication systems support a limited number of connection and are easy to implement. However, with development of communication technologies, mobile communication systems will not only support traditional communication, but also support, for example, Device to Device (D2D) communication, Machine to Machine (M2M) communication, Machine Type Communication (MTC), Vehicle to Vehicle (V2V) communication, etc., and the embodiments of the present application may also be applied to these communication systems.

Optionally, the communication systems in the embodiments of the present application may be applied to a Carrier Aggregation (CA) scenario, or may be applied to a Dual Connectivity (DC) scenario, and may also be applied to a Standalone (SA) Net scenario.

There is no limit made to the applied spectrum in the embodiments of the application. For example, the embodiments of the present application may be applied to a licensed spectrum and may also be applied to an unlicensed spectrum.

Exemplarily, a communication system 100 applied according to an embodiment of the present application is illustrated in FIG. 1. The communication system 100 may include a network device 110, and the network device 110 may be a device communicating with a terminal device 120 (or called a communication terminal or a terminal). The network device 110 may provide communication coverage for a specific geographical region and may communicate with a terminal device under the coverage.

FIG. 1 exemplarily shows one network device and two terminal devices. Optionally, the communication system 100 may include a plurality of network devices and may include other numbers of terminal devices under the coverage of each network device. There is no limit made thereto in the embodiments of the application.

Optionally, the communication system 100 may further include other network entities such as a network controller and a mobility management entity (MME). There is no limit made thereto in the embodiments of the application.

It is to be understood that a device with a communication function in the network/system in the embodiments of the application may be called a communication device. For example, for the communication system 100 illustrated in FIG. 1, communication devices may include the network device 110 and terminal device 120 with the communication function, and the network device 110 and the terminal device 120 may be the specific devices mentioned above and will not be elaborated herein. The communication devices may further include other devices in the communication system 100, for example, other network entities like a network controller and a mobility management entity. There is no limit made thereto in the embodiments of the application.

It is to be understood that the terms "system" and "network" in this article may usually be exchanged in the application. In the application, the term "and/or" is only a kind of association for describing related objects and, which means that there can be three kinds of relationships, for example, A and/or B may represent three conditions, i.e., independent existence of A, existence of both A and B and independent existence of B. In addition, the character "/" in this article generally represents that previous and next associated objects form an "or" relationship.

In the embodiments of the present application, various embodiments are described in conjunction with the terminal device and network device. The terminal device may also be referred to as a user equipment (UE), an access terminal, a user unit, a user station, a mobile station, a mobile platform, a remote station, a remote terminal, a mobile device, a user terminal, a terminal, a wireless communication device, a user agent, a user apparatus or the like. The terminal device may be a station (ST) in a WLAN, a cellular phone, a cordless telephone, a session initiation protocol (SIP) telephone, a wireless local loop (WLL) station, a personal digital assistant (PDA), a handheld device having a wireless communication function, a computation device or other processing devices connected to a radio modem, a vehicle device, a wearable device, a terminal device in a next-generation communication system such as a NR network, a Public Land Mobile Network (PLMN) that will be evolved in the future, and the like.

As an example without a limitation, in the embodiments of the present application, the terminal device may also be a wearable device. The wearable device may also be referred as a wearable smart device. It is a general term of devices intelligently designed for everyday wear and developed to be wearable by using wearable technologies, and these devices are such as glasses, gloves, watches, clothing and shoes. The wearable device is a portable device that is directly worn on the body or integrated into user's clothes or accessories. The wearable device is not only a hardware device, but also realizes powerful functions through software support, data interaction, and cloud interaction. In a broad sense, the wearable smart device includes for example a smart watch or smart glasses with full functions, a large-size, which can achieve complete or partial functions without relying on smart phones, and for example various smart bracelets and smart jewelry for physical sign monitoring that only focus on a certain type of application function, and needs to cooperate with other devices such as a smart phone.

The network device may be a device used for communicating with a mobile device. The network device may be an access point (AP) in WLAN, a base transceiver station (BTS) in GSM or CDMA, or a NodeB (NB) in WCDMA, or an evolutional Node B (eNB or eNodeB) in LTE, or a relay station or an access point, or a vehicle device, a wearable device, a network device or a gNB in the NR network or a network device in a PLMN that will be evolved in the future, and the like.

In the embodiments of the present application, the network device provides services for a cell, and the terminal device communicates with the network device through transmission resources (for example, frequency domain resources, or spectrum resources) used by the cell. The cell may be a cell corresponding to a network device (for example, a base station), and the cell may belong to a macro base station or a base station corresponding to a small cell. The small cell here may include a metro cell, a micro cell, a pico cell, a femto cell, and the like. These small cells have characteristics of small coverage and low transmit power, and are suitable for providing high-rate data transmission services.

In view of requirements of latency and reliability for transmission, the 5G Industrial Internet of Things (IIOT) introduces the concept of time sensitive communication (TSC). TSC services are usually ultra-reliable low-latency services, but in most scenarios, the occurrence of TSC services is periodical. The 5G IIOT introduces the configuration/restriction of mapping of logical channels to resources in order to better provide a guarantee of transmission for ultra-reliable low-latency services, especially to guarantee reliable transmission. The configuration/restriction is used to ensure the multiplexing of data of specific logical channels onto specific resources, preventing data of other logical channels from occupying the specific resources, causing a problem that the data of specific logical channels cannot be transmitted in time. However, in a situation that there are resources left after specific resources are used for transmission based on the configuration/restriction of mapping of logical channels to resources, how to use the remaining resources, or in a situation that the configuration/restriction of mapping of logical channels to resources is not configured, how to use the resources more efficiently, is a crucial problem that needs to be solved.

The solutions proposed in the present application in view of above technical problems will be described in detail below.

FIG. 2 is a schematic flowchart of a wireless communication method 200 according to an embodiment of the present application. It is noted that FIG. 2 and corresponding descriptions do not form part of the invention but are useful for understanding the invention. As shown in FIG. 2, the method 200 may include a part or all of the following contents:
In S210, a terminal device determines at least one logical channel that can be transmitted on an available first resource.

In S220, the terminal device multiplexes to-be-sent data in the at least one logical channel onto the first resource.

In S230, when a remaining resource exists in the first resource, the terminal device sends first information on the remaining resource.

Optionally, before Step S210, the terminal device needs to determine currently available resources, and the first resource is one of the currently available resources.

Optionally, in an embodiment of the present application, the first information includes at least one of the followings:
padding, media access control control element (MAC CE), to-be-sent data in a logical channel other than the at least one logical channel.

Optionally, in an embodiment of the present application, the terminal device further determines the content of the first information.

Optionally, the foregoing Step S230 may specifically be that:
the terminal device sends the first information on the remaining resource based on its implementation; or
the terminal device sends the first information on the remaining resource based on logical channel prioritization (LCP).

Optionally, in an embodiment of the present application, the first resource is a configured grant (CG) resource or a dynamic grant (DG) resource.

Optionally, as Example 1, the foregoing Step S210 may specifically be that:
based on correspondence between M logical channels and N resources, the terminal device determines the at least one logical channel that can be transmitted on the first resource, wherein the M logical channels include the at least one logical channel, the N resources include the first resource, M and N are positive integers, and M≥1 and N≥1.

Optionally, in Example 1, the terminal device receives first configuration information sent by a network device for configuring the logical channel.

The first configuration information includes at least one of the followings:
the correspondence between one or more logical channels in the M logical channels and the N resources;
the correspondence between the logical channel and at least one resource; and
a resource attribute of a resource to which the at least one logical channel can be mapped.

It should be noted that in the first configuration information, the correspondence between the logical channel and the at least one resource indicates the correspondence between a certain logical channel and the at least one resource, or the correspondence between any logical channel and the at least one resource.

That is, the terminal device may determine the correspondence between the M logical channels and the N resources based on the first configuration information.

It should be noted that the first configuration information includes at least one of the mapping of the logical channels to the resources, allowed grant resources (allowedGrant), allowed grant resource list (allowedGrant-list), allowed CG resources and allowed CG resource list. The first configuration information may be configured in logical channel configuration (LogicalChannelConfig) and may specifically include an associated CG resource index (index) or CG resource index list (index list).

Optionally, in Example 1, the first configuration information is an information configured by radio resource control (RRC).

Optionally, in Example 1, the foregoing Step S230 may specifically include at least one of the followings:
the terminal device sends the first information on the remaining resource when the first configuration information is configured and the resource attribute of the first resource and/or the logical channel that can be multiplexed on the first resource is indicated;
the terminal device sends the first information on the remaining resource when the first configuration information is configured and the correspondence between the one or more logical channels in the M logical channels and the N resources is enabled;
the terminal device sends the first information on the remaining resource when the first configuration information is configured and in the first configuration information, the correspondence between the logical channel and the at least one resource is enabled; and
the terminal device sends the first information on the remaining resource when the first configuration information is configured and the resource attribute of the resource to which the at least one logical channel can be mapped is enabled.

Optionally, in Example 1, the first resource is a CG resource or a DG resource.

Optionally, as Example 2, the foregoing Step S210 may specifically be that:
based on a resource attribute corresponding to each of M logical channels and the resource attribute of the first resource, the terminal device determines the at least one logical channel that can be transmitted on the first resource, wherein the M logical channels include the at least one logical channel, M is a positive integer, and M>_1; or
based on the resource attribute corresponding to the logical channel and the resource attribute of the first resource, the terminal device determines the at least one logical channel that can be transmitted on the first resource.

Optionally, in Example 2, the terminal device receives second configuration information sent by a network device for configuring the logical channel.

The second configuration information includes at least one of the followings:
the resource attribute corresponding to each of one or more logical channels in the M logical channels;
the correspondence between the logical channel and at least one resource; and
the resource attribute of a resource to which the at least one logical channel can be mapped.

It should be noted that in the second configuration information, the correspondence between the logical channel and the at least one resource indicates the correspondence between a certain logical channel and the at least one resource, or the correspondence between any logical channel and the at least one resource.

That is, the terminal device may determine the resource attribute corresponding to the logical channel based on the second configuration information or may determine the resource attribute corresponding to each of the M logical channels.

Optionally, in Example 2, the foregoing Step S230 may specifically include at least one of the followings:
the terminal device sends the first information on the remaining resource when the second configuration information is configured and the resource attribute of the first resource and/or the logical channel that can be multiplexed on the first resource is indicated;
the terminal device sends the first information on the remaining resource when the second configuration information is configured and the resource attribute corresponding to each of the one or more logical channels in the M logical channels is enabled;
the terminal device sends the first information on the remaining resource when the second configuration information is configured and in the second configuration information, the correspondence between the logical channel and the at least one resource is enabled; and
the terminal device sends the first information on the remaining resource when the second configuration information is configured and the resource attribute of the resource to which the at least one logical channel can be mapped is enabled.

Optionally, in Example 2, the terminal device receives a first downlink control information (DCI) sent by the network device, and the first DCI at least indicates the resource attribute of the first resource.

For example, the first DCI is configured to indicate the resource attribute of the first resource and/or an index of the at least one logical channel.

Optionally, in Example 2, the first resource is a DG resource, or the first resource is a CG type 2 resource.

It should be noted that the CG resource is classified into two types, i.e., type 1 and type 2. The CG type 1 resource is a CG resource that is activated as along as being configured by RRC. The CG type 2 resource is a CG resource that still needs a DCI indication to be able to be activated even after being configured.

Optionally, in the foregoing Example 1 or Example 2, the resource attribute includes at least one of the followings:
resource priority, resource reliability indication, cell radio network temporary identity (C-RNTI) or modulation and coding scheme cell radio network temporary identifier (MCS-C-RNTI) used by the resource, modulation and coding scheme (MCS) list information corresponding to the resource, service indication carried by the resource, logical channel indication to which the resource can be mapped, and MAC CE indication to which the resource can be mapped.

Optionally, in the embodiment of the present application, if a first MAC CE or a first common control channel (CCCH) service data unit (SDU) exists and the priority of the first MAC CE or the first CCCH SDU is higher than the priority of the at least one logical channel, the terminal device executes one of the following operations:
using the remaining resource or the first resource to transmit to-be-sent information based on the priorities of the logical channel other than the at least one logical channel, the MAC CE and the CCCH SDU;
using the remaining resource or the first resource to transmit to-be-sent information based on logical channel prioritization (LCP) or LCP mapping condition except for the at least one logical channel;
preferably using the remaining resource or the first resource to transmit the first MAC CE or the first CCCH SDU;
treating the first MAC CE or the first CCCH SDU as a part of the first information; and
if the correspondence between P MAC CEs or CCCH SDUs and Q resources exists and the resources corresponding to the first MAC CE or the first CCCH SDU does not include the first resource, determining not to multiplex the first MAC CE or the first CCCH SDU onto the remaining resource, or determining not to multiplex the first MAC CE or the first CCCH SDU onto the first resource, or treating the first MAC CE or the first CCCH SDU as a part of the first information, wherein the P MAC CEs or CCCH SDUs include the first MAC CE or the first CCCH SDU, and P and Q are positive integers.

The LCP mapping condition includes at least one of the followings:
allowed subcarrier spacing (SCS) list (allowedSCS-List);
maximum physical uplink shared channel (PUSCH) duration (maxPUSCH-Duration);
allowed CG type 1 (configuredGrantType1Allowed); and
allowed serving cells (allowedServingCells).

Optionally, in an embodiment of the present application, the LCP is ranked from high to low as follows:
MAC CE carrying C-RNTI or data carried by UL-CCCH;
MAC CE carrying configured grant confirmation;
MAC CE used to transmit a buffer status report (BSR), wherein the BSR is not a BSR used for padding transmission;
MAC CE carrying a single-entry power headroom report (PHR) or MAC CE carrying a multiple-entry PHR;
data on any logical channel, except for data carried by UL-CCCH;
MAC CE for recommended bit rate query; and
MAC CE carrying BSR used for padding transmission.

In the embodiment of the present application, when the remaining resource exists in the first resource, the terminal device sends the first information on the remaining resource. The first information can match the configuration or management by the network device as much as possible so as to satisfy the requirements of the configuration or restriction information of the network device. Also, sending the first information on the remaining resource can use resources as much as possible to transmit more valid data and improve resource utilization rate.

The wireless communication method 200 of the present application is described in detail below with a use of Embodiment 1. Specifically, the terminal device receives configuration information configured by the network device through RRC. The configuration information includes at least one of the mapping of the logical channels to the resources, allowed grant resources (allowedGrant), allowed grant resource list (allowedGrant-list), allowed CG resources and allowed CG resource list. The configuration information may be configured in logical channel configuration (LogicalChannelConfig) and may specifically include an associated CG resource index (index) or CG resource index list (index list). Also, the network device configures a CG resource and an index indicating the CG resource correspondingly.

In Embodiment 1, it is assumed that the resources configured by the network device for the terminal device are CG resource 1, CG resource 2 and CG resource 3, and the logical channels (LCHs) configured by the network device for the terminal device are LCH 1, LCH 2, LCH 3, LCH 4, LCH 5 and LCH 6. Based on above configuration information, it can be determined that data on LCH 1, LCH 2 and LCH 3 can be transmitted by using CG resource 1, data on LCH 1 and LCH 4 can be transmitted by using CG resource 2, and data on LCH 5 and LCH 6 can be transmitted by using CG resource 3.

In Embodiment 1, if at time t1, the terminal device determines that CG resource A is available. Based on above configuration information, the terminal device determines a LCH that can be transmitted on the CG resource A and performs MAC PDU packaging.

Specifically, in the process of packaging or multiplexing:
only the configured resource-related LCH can be multiplexed onto the CG resource A;
if there is a remaining resource, the remaining resource is only used for padding transmission, or the remaining resource is used to transmit specific information, or how to fill the remaining resource depends on an implementation of the terminal device. The specific information includes MAC CE and data on a LCH not associated to the CG resource A.

For example, CG resource 1 is an available resource at time t1. It can be determined based on above configuration information that to-be-sent data on LCH 1, LCH 2 and LCH 3 can be transmitted using the CG resource 1. It is assumed that the size of CG resource 1 is 50 bytes, to-be-sent data of LCH 1 is 10 bytes, to-be-sent data of LCH 2 is 20 bytes, to-be-sent data of LCH 3 is 10 bytes, to-be-sent data of LCH 4 is 8 bytes, and MAC CE for recommended bit rate query is 2 bytes. Based on LCP, the terminal device multiplexes the to-be-sent data on LCH 1, LCH 2 and LCH 3 onto the CG resource 1.

After that, the remaining resource (10 bytes) exists. At this time, the terminal device may execute one of a, b and c as below:
a. Only the padding is transmitted in the remaining resource.
b. What information is transmitted on the remaining resource depends on an implementation of the terminal device. For example, the terminal device may multiplex the MAC CE for recommended bit rate query onto the CG resource 1, and then fill the remaining resource with the padding. Alternatively, after the to-be-sent data of LCH 4 is multiplexed onto the CG resource 1, the remaining resource is filled with the padding. Alternatively, neither LCH 4 nor MAC CE is filled, but only the padding.
c. The multiplexing is performed based on LCP. Here, the priority of MAC CE for recommended bit rate query is lower than the priority of LCH 4. The terminal device first multiplexes the to-be-sent data on LCH 4, and then multiplexes the MAC CE for recommended bit rate query.

In Embodiment 1, the terminal device sends the packaged MAC PDU to the network device via air interface.

Optionally, in Embodiment 1, when there is a MAC CE or CCCH SDU with a priority higher than that of LCH 1, LCH 2 and LCH 3, the terminal device may execute one of the followings:
1) onto the remaining resource, preferably multiplexing the MAC CE or CCCH SDU with a priority higher than that of LCH 1, LCH 2 and LCH 3;
2) treating the MAC CE or CCCH SDU as the afore-mentioned specific information.
3) also configurating a mapping between the MAC CE or CCCH SDU and resources. When the CG resource 1 is not included in the configured mapping for the MAC CE or CCCH SDU, it is considered that the MAC CE or CCCH SDU cannot be multiplexed onto the CG resource 1, or the MAC CE or CCCH SDU is considered to be the afore-mentioned specific information.

It should be noted that the foregoing Embodiment 1 is illustrated only by taking CG resources as an example. Of course, DG resources are also applicable. For the sake of simplicity, details are not repeated herein.

FIG. 3 is a schematic flowchart of a wireless communication method 300 according to an embodiment of the present application. As shown in FIG. 3, the method 300 may include a part or all of the following contents:
In S310, the terminal device determines that a first resource is available.

In S320, when a first condition is met, the terminal device performs MAC PDU packaging or information multiplexing on the first resource.

In an embodiment of the present application, the first condition may include at least one of the followings:
correspondence between logical channels and resources is not configured (It is noted that this feature has been incorporated into independent claim and is not optional),
relation between logical channels and resource attributes is not configured,
the resource attribute of the first resource is not indicated,
the logical channel that the first resource can carry is not indicated,
a conflict occurs on the resource attribute of the first resource,
a configured LCP mapping condition does not match the resource attribute of the first resource,
a conflict occurs between the configured LCP mapping condition and the resource attribute of the first resource,
based on the LCP mapping condition, no MAC CE and/or logical channel that can be mapped to the first resource exists,
an indication of all or a part of the LCP mapping conditions is disabled.

In the first condition, the fact that the correspondence between logical channels and resources is not configured can be understood as a fact that the correspondence between logical channels and CG resources is not configured and/or the correspondence between logical channels and DG resources is not configured.

It should be noted that the fact that the configured LCP mapping condition does not match the resource attribute of the first resource can be understood as a fact that the logical channels are configured with much more restriction information, but less restriction information is indicated in the resource attribute; or a fact that the logical channels are configured with much less restriction information, but more restriction information is indicated in the resource attribute; or a fact that the amount of restriction information configured for the logical channels is as the same as the amount of restriction information indicated in the resource attribute but their restriction information is different from each other.

Optionally, the foregoing Step S320 may specifically be that:
based on the resource attribute of the first resource, the terminal device performs the MAC PDU packaging or the information multiplexing on the first resource.

In an embodiment of the present application, the first resource is a CG resource or a DG resource (It is noted that this feature has been incorporated into independent claim and is not optional).

In an embodiment of the present application, the first condition is indicated or configured by a network device (It is noted that this feature has been incorporated into independent claim and is not optional). Optionally, the first condition is pre-configured, or the first condition is determined by the terminal device.

Optionally, the foregoing step S320 may specifically include at least one of the followings:
the terminal device multiplexes any logical channel and/or any MAC CE onto the first resource, or on the first resource the terminal device performs the MAC PDU packaging on any logical channel and/or any MAC CE;
the terminal device multiplexes onto the first resource the logical channel and/or MAC CE that meets the LCP mapping condition, or on the first resource the terminal device performs the MAC PDU packaging on the logical channel and/or MAC CE that meets the LCP mapping condition; (It is noted that this feature has been incorporated into independent claim and is not optional)
the terminal device only multiplexes the MAC CE and/or CCCH SDU onto the first resource, or on the first resource the terminal device performs the MAC PDU packaging only on the MAC CE and/or CCCH SDU;
the terminal device multiplexes specific MAC CE and/or a logical channel with specific priority, specific indication or specific service onto the first resource, or on the first resource the terminal device performs the MAC PDU packaging on the specific MAC CE and/or the logical channel with specific priority, specific indication or specific service;
based on the priority of each restriction factor in the LCP mapping condition, the terminal device prioritizes the restriction factor whose priority is higher than a first threshold and performs the MAC PDU packaging or the multiplexing on the first resource;
based on the priority of each restriction factor in the LCP mapping condition, the terminal device prioritizes a specific restriction factor and performs the MAC PDU packaging or the multiplexing on the first resource; and
the terminal device determines to ignore the first resource. (It is noted that this feature has been incorporated into independent claim and is not optional)

It should be noted that the afore-mentioned logical channel with specific priority can be a logical channel carrying a service such as an ultra-reliable and low-latency communication (URLLC) service, an enhance mobile broadband (eMBB) service, etc. The afore-mentioned logical channel with specific indication can be a logical channel with priority indication, a logical channel with reliability indication, a logical channel with general indication, and so on.

Optionally, in an embodiment of the present application, the resource attribute of the first resource includes at least one of the followings:
the priority of the first resource, a reliability indication of the first resource, a service indication of the first resource, an indication of the logical channel that can be mapped onto the first resource, an indication of the MAC CE that can be mapped onto the first resource, PUSCH duration corresponding to the first resource, MCS level corresponding to the first resource, MCS list information corresponding to the first resource, MCS-C-RNTI corresponding to the first resource, the type of the first resource and the size of transmission block of the first resource.

Optionally, the type of the first resource includes at least one of the followings:
configured grant (CG) type 1 resource, CG type 2 resource and dynamic grant (DG) resource.

In the embodiment of the present application, when the first condition is met, the terminal device performs the MAC PDU packaging or information multiplexing on the first resource. This avoids a problem that the terminal device does not know how to deal with the situation when the first condition is met. In such a way, the resources can be used more efficiently. Further, the terminal device can also determine different ways of resource utilization based on the attributes of the resources such that the resources can be used more efficiently.

The wireless communication method 300 of the present application is described in detail below with a use of Embodiment 2. Specifically, the terminal device receives configuration information configured by the network device through RRC. By the configuration information, the terminal device may know LCH configuration (LogicalChannelConfig) and CG resource configuration, including a corresponding CG index.

Optionally, the configuration information includes at least one of the mapping of the logical channels to the resources, allowed grant resources (allowedGrant), allowed grant resource list (allowedGrant-list), allowed CG resources and allowed CG resource list. The configuration information may be configured in logical channel configuration (LogicalChannelConfig) and may specifically include an associated CG resource index (index) or CG resource index list (index list).

In Embodiment 2, it is assumed in Assumption 1 that the resources configured by the network device for the terminal device are CG resource 1, CG resource 2, CG resource 3 and CG resource 4, and the logical channels configured by the network device for the terminal device are LCH 1, LCH 2, LCH 3, LCH 4, LCH 5 and LCH 6. Based on above configuration information, it can be determined that data on LCH 1, LCH 2 and LCH 3 can be transmitted by using CG resource 1, data on LCH 1 and LCH 4 can be transmitted by using CG resource 2, and data on LCH 5 and LCH 6 can be transmitted by using CG resource 3. It is noted that here, there is no corresponding mapped LCH is configured for CG resource 4, that is, there is no CG resource 4 in the configured allowedGrant or allowedGrant-list when any LCH is configured.

It is assumed in Assumption 2 that the resources configured by the network device for the terminal device are CG resource 1, CG resource 2, CG resource 3 and CG resource 4, and the logical channels configured by the network device for the terminal device are LCH 1, LCH 2, LCH 3, LCH 4, LCH 5 and LCH 6. However, all the LCHs are not configured with allowedGrant or allowedGrant-list.

In Embodiment 2, the terminal device determines that CG resource A is available. Based on above configuration information, the terminal device determines a LCH that can be transmitted on the CG resource A and performs MAC PDU packaging.

Specifically, it is assumed that CG resource 4 is an available resource at time t1, and based on above configuration information, the terminal device determines that the mapping between the LCHs and the resources is not configured or the mapping between the LCH and the resource is not configured for the CG resource 4. In this case, to package MAC PDU, the terminal device executes one of a to d as follows:
a) It is considered that there is no restriction on the mapping of LCH to resource, that is, any MAC CE and any LCH can be multiplexed onto the CG resource 4;
b) It is considered that only the LCH that meets the LCP mapping condition can be multiplexed onto the CG resource 4;
c) It is considered that no LCH can be mapped to the CG resource 4 and only MAC CE or CCCH SDU can be placed;
d) It is considered that the CG resource 4 is skipped and no information can be transmitted using the CG resource 4.

Further, based on the resource attribute (e.g., high priority or low priority, long or short PUSCH duration, MCS level, CG or DG, TBS size, etc.), the terminal device can also determine which method among the foregoing a to d is to be used. For example, the method described in the foregoing a or b is used for high priority, or short PUSCH duration, or DG resource, or large TBS size; otherwise, the method described in the foregoing c or d is used.

It is assumed that the size of CG resource 4 is 40 bytes, to-be-sent data of LCH 1 is 10 bytes, to-be-sent data of LCH 2 is 10 bytes (a configured allowed serving cell is Cell 3), to-be-sent data of LCH 3 is 10 bytes. LCH 1 to 3 gradually decreases in their priorities. At this time, there is triggered MAC CE for recommended bit rate query (accounting for 2 bytes) and BSR MAC CE (accounting for 2 bytes).

For example, the terminal device executes the foregoing method a, that is, it is considered by the terminal device that any MAC CE and any LCH can be multiplexed onto the CG resource 4. Then, based on LCP priority, the terminal device sequentially multiplexes the BSR MAC CE (accounting for 2 bytes), to-be-set data of LCH 1 and to-be-set data of LCH 2 onto the CG resource 4, and only 8 bytes of to-be-set data of LCH 3 is multiplexed onto the CG resource 4.

For another example, UE, the terminal device, determines to use the foregoing method b based on the attribute of the CG resource 4 (which has high priority), that is, it is considered that the LCP mapping condition is obeyed and only the LCH that meets the LCP mapping condition can be multiplexed onto the CG resource 4. If the CG resource 4 is configured for Cell 1, to-be-set data of LCH 2 cannot be multiplexed onto the CG resource 4. Based on the LCP mapping condition and the LCP, the terminal device sequentially multiplexes the BSR MAC CE (accounting for 2 bytes), to-be-set data of LCH 1 and to-be-set data of LCH 3, and multiplexes the MAC CE for recommended bit rate query (accounting for 2 bytes) onto the CG resource 4, and the remaining resource is filled with the padding (accounting for 16 bytes, that is, 40-2-10-10-2=16).

In Embodiment 2, the terminal device sends the packaged MAC PDU to the network device via air interface.

It should be noted that the foregoing Embodiment 2 is illustrated only by taking CG resources as an example. Of course, DG resources are also applicable. For the sake of simplicity, details are not repeated herein.

It should be understood that the terminology used in the wireless communication method 300 can be referred to related descriptions of the wireless communication method 200, which are not repeated herein for the sake of simplicity.

FIG. 4 is a schematic block diagram illustrating a terminal device 400 according to an embodiment of the present application. It is noted that FIG. 4 and corresponding descriptions do not form part of the invention but are useful for understanding the invention. As shown in FIG. 4, the terminal device 400 includes:
a processing unit 410, configured to determine at least one logical channel that can be transmitted on an available first resource;
a communication unit 420, configured to multiplex to-be-sent data in the at least one logical channel onto the first resource; and
when a remaining resource exists in the first resource, the communication unit 420 is further configured to send first information on the remaining resource.

Optionally, the first information includes at least one of the followings:
padding, MAC CE, to-be-sent data in a logical channel other than the at least one logical channel.

Optionally, the processing unit 410 is further configured to determine the content of the first information.

Optionally, the communication unit 420 is configured to:
send the first information on the remaining resources based on an implementation of the terminal device; or
send the first information on the remaining resource based on logical channel prioritization (LCP).

Optionally, the first resource is a CG resource or a DG resource.

Optionally, the processing unit 410 is configured to:
based on correspondence between M logical channels and N resources, determine the at least one logical channel that can be transmitted on the first resource, wherein the M logical channels include the at least one logical channel, the N resources include the first resource, M and N are positive integers, and M≥1 and N≥1.

Optionally, the communication unit 420 is further configured to receive first configuration information for configuring the logical channel,
wherein the first configuration information includes at least one of the followings:
the correspondence between one or more logical channels in the M logical channels and the N resources;
the correspondence between the logical channel and at least one resource; and
a resource attribute of a resource to which the at least one logical channel can be mapped.

Optionally, the first configuration information is an information configured by RRC.

Optionally, the communication unit 420 sends the first information on the remaining resource and this operation includes at least one of the followings:
sending, by the communication unit 420, the first information on the remaining resource when the first configuration information is configured and the resource attribute of the first resource and/or the logical channel that can be multiplexed on the first resource is indicated;
sending, by the communication unit 420, the first information on the remaining resource when the first configuration information is configured and the correspondence between the one or more logical channels in the M logical channels and the N resources is enabled;
sending, by the communication unit 420, the first information on the remaining resource when the first configuration information is configured and in the first configuration information, the correspondence between the logical channel and the at least one resource is enabled; and
sending, by the communication unit 420, the first information on the remaining resource when the first configuration information is configured and the resource attribute of the resource to which the at least one logical channel can be mapped is enabled.

Optionally, the first resource is a CG resource or a DG resource.

Optionally, the processing unit 410 is configured to:
based on a resource attribute corresponding to each of M logical channels and the resource attribute of the first resource, determine the at least one logical channel that can be transmitted on the first resource, wherein the M logical channels include the at least one logical channel, M is a positive integer, and M≥1; or
based on the resource attribute corresponding to the logical channel and the resource attribute of the first resource, determine the at least one logical channel that can be transmitted on the first resource.

Optionally, the communication unit 420 is further configured to receive second configuration information for configuring the logical channel,
wherein the second configuration information includes at least one of the followings:
the resource attribute corresponding to each of one or more logical channels in the M logical channels;
the correspondence between the logical channel and at least one resource; and
a resource attribute of a resource to which the at least one logical channel can be mapped.

Optionally, the communication unit 420 sends the first information on the remaining resource and this operation includes at least one of the followings:
sending, by the communication unit 420, the first information on the remaining resource when the second configuration information is configured and the resource attribute of the first resource and/or the logical channel that can be multiplexed on the first resource is indicated;
sending, by the communication unit 420, the first information on the remaining resource when the second configuration information is configured and the resource attribute corresponding to each of the one or more logical channels in the M logical channels is enabled;
sending, by the communication unit 420, the first information on the remaining resource when the second configuration information is configured and in the second configuration information, the correspondence between the logical channel and the at least one resource is enabled; and
sending, by the communication unit 420, the first information on the remaining resource when the second configuration information is configured and the resource attribute of the resource to which the at least one logical channel can be mapped is enabled.

Optionally, the communication unit is further configured to receive a first DCI configured to indicate the resource attribute of the first resource and/or an index of the at least one logical channel.

Optionally, the first resource is a DG resource, or the first resource is a CG type 2 resource.

Optionally, the resource attribute includes at least one of the followings:
resource priority, resource reliability indication, C-RNTI or MCS-C-RNTI used by the resource, MCS list information corresponding to the resource, service indication carried by the resource, logical channel indication to which the resource can be mapped, and MAC CE indication to which the resource can be mapped.

Optionally, if a first MAC CE or a first common control channel (CCCH) service data unit (SDU) exists and the priority of the first MAC CE or the first CCCH SDU is higher than the priority of the at least one logical channel, the processing unit 410 is further configured to execute one of the following operations:
using the remaining resource or the first resource to transmit to-be-sent information based on the priorities of the logical channel other than the at least one logical channel, the MAC CE and the CCCH SDU;
using the remaining resource or the first resource to transmit to-be-sent information based on logical channel prioritization (LCP) or LCP mapping condition except for the at least one logical channel;
preferably using the remaining resource or the first resource to transmit the first MAC CE or the first CCCH SDU;
treating the first MAC CE or the first CCCH SDU as a part of the first information; and
if the correspondence between P MAC CEs or CCCH SDUs and Q resources exists and the resources corresponding to the first MAC CE or the first CCCH SDU does not include the first resource, determining not to multiplex the first MAC CE or the first CCCH SDU onto the remaining resource, or determining not to multiplex the first MAC CE or the first CCCH SDU onto the first resource, or treating the first MAC CE or the first CCCH SDU as a part of the first information, wherein the P MAC CEs or CCCH SDUs include the first MAC CE or the first CCCH SDU, and P and Q are positive integers.

Optionally, the to-be-sent information includes at least one of the followings:
to-be-sent data on a logical channel other than the at least one logical channel, triggered report information and MAC CE.

It is to be understood that the terminal device 400 according to the embodiment of the application may correspond to the terminal device in the method embodiment of the application and the above-mentioned and other operations and/or functions of each unit in the terminal device 400 are adopted to implement the corresponding flows executed by the terminal device in the method 200 shown in FIG. 2 respectively and will not be elaborated herein for simplicity.

FIG. 5 is a schematic block diagram illustrating a terminal device 500 according to an embodiment of the present application. As shown in FIG. 5, the terminal device 500 includes:
a processing unit 510, configured to determine that a first resource is available; and
a communication unit 520, configured to perform, when a first condition is met, MAC PDU packaging or information multiplexing on the first resource,
wherein the first resource is a configured grant (CG) resource or a dynamic grant (DG) resource; the first condition is indicated or configured by a network device;
wherein the first condition is that correspondence between logical channels and resources is not configured,
wherein the performing, by the terminal device, MAC PDU packaging or information multiplexing on the first resource includes:
multiplexing, by the terminal device, onto the first resource the logical channel that meets logical channel prioritization (LCP) mapping condition; or
determining, by the terminal device, to ignore the first resource,
wherein the LCP mapping condition includes at least one of the followings:
allowed subcarrier spacing (SCS) list;
maximum physical uplink shared channel (PUSCH) duration;
allowed CG type 1; and
allowed serving cells,
wherein a CG type 1 resource is a CG resource that is activated as along as being configured by radio resource control (RRC).

Optionally, the communication unit 520 is configured to:
based on the resource attribute of the first resource, perform the MAC PDU packaging or the information multiplexing on the first resource.

Optionally, the first condition is pre-configured, or the first condition is determined by the terminal device.

Optionally, the communication unit 520 performs the MAC PDU packaging or the information multiplexing on the first resource and this operation includes at least one of the followings:
the communication unit 520 multiplexes any logical channel and/or any MAC CE onto the first resource, or on the first resource the communication unit 520 performs the MAC PDU packaging on any logical channel and/or any MAC CE;
the communication unit 520 only multiplexes the MAC CE and/or common control channel (CCCH) service data unit (SDU) onto the first resource, or on the first resource the communication unit 520 performs the MAC PDU packaging only on the MAC CE and/or CCCH SDU;
the communication unit 520 multiplexes specific MAC CE and/or a logical channel with specific priority, specific indication or specific service onto the first resource, or on the first resource the communication unit 520 performs the MAC PDU packaging on the specific MAC CE and/or the logical channel with specific priority, specific indication or specific service;
based on the priority of each restriction factor in the LCP mapping condition, the communication unit 520 prioritizes the restriction factor whose priority is higher than a first threshold and performs the MAC PDU packaging or the multiplexing on the first resource;
based on the priority of each restriction factor in the LCP mapping condition, the communication unit 520 prioritizes a specific restriction factor and performs the MAC PDU packaging or the multiplexing on the first resource.

Optionally, the resource attribute of the first resource includes at least one of the followings:
the priority of the first resource, a reliability indication of the first resource, a service indication of the first resource, an indication of the logical channel that can be mapped onto the first resource, an indication of the MAC CE that can be mapped onto the first resource, PUSCH duration corresponding to the first resource, MCS level corresponding to the first resource, MCS list information corresponding to the first resource, MCS-C-RNTI corresponding to the first resource, the type of the first resource and the size of transmission block of the first resource.

Optionally, the type of the first resource includes at least one of the followings:

CG type 1 resource, CG type 2 resource and DG resource.

It is to be understood that the terminal device 500 according to the embodiment of the application may correspond to the terminal device in the method embodiment of the application and the above-mentioned and other operations and/or functions of each unit in the terminal device 500 are adopted to implement the corresponding flows executed by the terminal device in the method 300 shown in FIG. 3 respectively and will not be elaborated herein for simplicity.

FIG. 6 is a structural schematic diagram illustrating a communication device 600 provided in an embodiment of the present application. The communication device 600 shown in FIG. 6 includes a processor 610, wherein the processor 610 may call and run a computer program from a memory to implement a method in an embodiment of the present application.

Optionally, as shown in FIG. 6, the communication device 600 may further include a memory 620. The processor 610 may call and run a computer program from the memory 620 to implement a method in an embodiment of the present application.

The memory 620 may be a separate device independent of the processor 610 or may be integrated in the processor 610.

Optionally, as shown in FIG. 6, the communication device 600 may further include a transceiver 630, and the processor 610 may control the transceiver 630 to communicate with another device. Specifically, information or data may be sent to another device, or information or data sent by another device is received.

The transceiver 630 may include a transmitter and a receiver. The transceiver 630 may further include antennas, wherein the number of antennas may be one or more.

Optionally, the communication device 600 may be a network device according to an embodiment of the present application, and the communication device 600 may implement corresponding processes implemented by the network device in various methods of embodiments of the present application, which will not be repeated here for the sake of brevity.

Optionally, the communication device 600 may be a mobile terminal/ a terminal device according to an embodiment of the present application, and the communication device 600 may implement corresponding processes implemented by the mobile terminal/ the terminal device in various methods of the embodiments of the present application, which will not be repeated here for the sake of brevity.

FIG. 7 is a structural schematic diagram illustrating a device according to an embodiment of the present application. The device 700 shown in FIG. 7 includes a processor 710, wherein the processor 710 may call and run a computer program from a memory to implement a method in an embodiment of the present application.

Optionally, as shown in FIG. 7, the device 700 may further include a memory 720. The processor 710 may call and run a computer program from the memory 720 to implement a method in an embodiment of the present application.

The memory 720 may be a separate device independent of the processor 710 or may be integrated in the processor 710.

Optionally, the device 700 may further include an input interface 730. The processor 710 may control the input interface 730 to communicate with other devices or chips, in particular, to acquire information or data transmitted by other devices or chips.

Optionally, the device 700 may further include an output interface 740. The processor 710 may control the output interface 740 to communicate with other devices or chips, in particular, to output information or data to other devices or chips.

Optionally, the device can be applied to the network device or the base station in the embodiment of the present application; moreover, the device may perform corresponding processes implemented by the network device or the base station in each of the methods of the embodiment of the present application. For brevity, details will not be described herein again.

Optionally, the device can be applied to the mobile terminal/the terminal device in the embodiment of the present application; moreover, the device may perform corresponding processes implemented by the mobile terminal/the terminal device in each of the methods of the embodiment of the present application. For brevity, details will not be described herein again.

Optionally, the device mentioned in the embodiment of the present application may also be a chip. For example, it can be a system-level chip, a system-on-chip, a chip system.

FIG. 8 is a schematic block diagram illustrating a communication system 800 provided in an embodiment of the present application. As shown in FIG. 8, the communication system 800 includes a terminal device 810 and a network device 820.

The terminal device 810 can be used to implement corresponding functions implemented by the terminal device in afore-described methods, and the network device 820 can be used to implement corresponding functions implemented by the network device or the base station in afore-described methods. For brevity, details will not be described herein again.

It is to be understood that the processor of the embodiment of the present application may be an integrated circuit chip with signal processing capabilities. In the implementation process, each step of the foregoing method embodiment may be completed by an integrated logic circuit in the processor or instructions in a form of software. The foregoing processor may be a general-purpose processor, a digital signal processor (DSP), an application specific integrated circuit (ASIC), a field programmable gate array (FPGA), or other programmable logic device, discrete gate, or a transistor logic device, or a discrete hardware component. The methods, steps, and logical block diagrams disclosed in the embodiments of the present application can be implemented or executed. The general-purpose processor may be a microprocessor or the processor may also be any conventional processor, or the like. The steps of the method disclosed in the embodiments of the present application may be directly implemented by the hardware decoding processor, or may be performed by a combination of hardware and software modules in the decoding processor. The software module may be located in a conventional storage medium in the art, such as a random access memory, a flash memory, a read only memory, a programmable read only memory or an electrically erasable programmable memory, and a register. The storage medium is located in the memory, and the processor reads the information in the memory and completes the steps of the above method in combination with its hardware.

It is understood that the memory in the embodiments of the present application may be a volatile memory or a non-volatile memory, or may include both volatile and non-volatile memory. Suitable non-volatile memories may include read only memory (ROM), programmable ROM (PROM), erasable programmable ROM (EPROM), electrically erasable programmable ROM (EEPROM), or flash memory. Volatile memories may include random access memory (RAM), which acts as an external cache. By way of example, but not limitation, many forms of RAM are available, such as a static random access memory (SRAM), a dynamic random access memory (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DR RAM). It should be noted that the memory of the systems and methods described herein may include, but not limited to, these and any other suitable types of memory.

It is to be understood that foregoing memory is exemplary but not limited, and for example, the memory in the embodiments of the present application may also be as a static random access memory (SRAM), a dynamic random access memory (DRAM), a Synchronous DRAM (SDRAM), a Double Data Rate SDRAM (DDR SDRAM), an Enhanced SDRAM (ESDRAM), a Synchlink DRAM (SLDRAM) or a Direct Rambus RAM (DR RAM). That is, the memory in the embodiments of the present application includes, but is not limited to, these and any other suitable types of memory.

The embodiment of the present application further provides a computer readable storage medium for storing a computer program.

Optionally, the computer readable storage medium can be applied to the network device or the base station in the embodiment of the present application; moreover, the computer readable storage medium enables a computer to execute corresponding processes implemented by the network device or the base station in each of the methods of the embodiment of the present application. For brevity, details will not be described herein again.

Optionally, the computer readable storage medium can be applied to the mobile terminal/ the terminal device in the embodiment of the present application; moreover, the computer readable storage medium enables a computer to execute corresponding processes implemented by the mobile terminal/ the terminal device in each of the methods of the embodiment of the present application. For brevity, details will not be described herein again.

The embodiment of the present application further provides a computer program product including computer program instructions.

Optionally, the computer program product can be applied to the network device or the base station in the embodiment of the present application; moreover, the computer program product enables a computer to execute corresponding processes implemented by the network device or the base station in each of the methods of the embodiment of the present application. For brevity, details will not be described herein again.

Optionally, the computer program product can be applied to the mobile terminal/ the terminal device in the embodiment of the present application; moreover, the computer program product enables a computer to execute corresponding processes implemented by the mobile terminal/ the terminal device in each of the methods of the embodiment of the present application. For brevity, details will not be described herein again.

The embodiment of the present application further provides a computer program.

Optionally, the computer program can be applied to the network device or the base station in the embodiment of the present application; moreover, the computer program enables a computer to execute corresponding processes implemented by the network device or the base station in each of the methods of the embodiment of the present application. For brevity, details will not be described herein again.

Optionally, the computer program can be applied to the mobile terminal/ the terminal device in the embodiment of the present application; moreover, the computer program enables a computer to execute corresponding processes implemented by the mobile terminal/ the terminal device in each of the methods of the embodiment of the present application. For brevity, details will not be described herein again.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. Professional technicians can use different methods to implement the described functions for each specific application, but such implementation should not be considered to be beyond the scope of the present application.

It may be clearly understood by a person skilled in the art that, for ease and brevity of description, for a detailed working process of the foregoing system, apparatus, and unit, reference may be made to a corresponding process in the foregoing embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the presented or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts presented as units may or may not be physical units, may be located in one position, or may be distributed on a plurality of network units. Some or all of the units may be selected according to actual requirements to achieve the purposes of the solutions of the embodiments.

In addition, the functional units in various implementations of the present disclosure may be integrated into one processing unit, or each unit may be physically present, or two or more units may be integrated into one unit.

When the functions are implemented in the form of a software functional unit and sold or used as an independent product, the functions may be stored in a computer-readable storage medium. Based on such an understanding, the technical solutions of the present application essentially, or the part contributing to the prior art, or a part of the technical solutions may be implemented in a form of a software product. The computer software product is stored in a storage medium, and includes several instructions for instructing a computer device (which may be a personal computer, a server, or a network device) to perform all or a part of the steps of the method described in each of the embodiments of the application. The foregoing storage medium includes any medium that can store program codes, such as a USB flash drive, a removable hard disk, a Read-Only Memory (ROM), a Random Access Memory (RAM), a magnetic disk, or an optical disc.

## Claims

1. A wireless communication method, comprising:
determining (S310), by a terminal device (500), that a first resource is available; and
when a first condition is met, performing (S320), by the terminal device (500), media access control, MAC, physical data unit, PDU, packaging or information multiplexing on the first resource,
wherein the first resource is a configured grant, CG, resource or a dynamic grant, DG, resource; the first condition is indicated or configured by a network device;
wherein the first condition is that correspondence between logical channels and resources is not configured,
wherein the performing, by the terminal device (500), MAC PDU packaging or information multiplexing on the first resource comprises:
multiplexing, by the terminal device (500), onto the first resource the logical channel that meets logical channel prioritization, LCP, mapping condition; or
determining, by the terminal device (500), to ignore the first resource,
wherein the LCP mapping condition includes at least one of the followings:
allowed subcarrier spacing, SCS, list;
maximum physical uplink shared channel, PUSCH, duration;
allowed CG type 1; and
allowed serving cells,
wherein a CG type 1 resource is a CG resource that is activated as along as being configured by radio resource control, RRC.

2. The method of claim 1, **characterized in that** the performing (S320), by the terminal device (500), the MAC PDU packaging or the information multiplexing on the first resource comprises:
based on a source attribute of the first resource, performing, by the terminal device (500), the MAC PDU packaging or the information multiplexing on the first resource.

3. The method of any of claims 1 to 2, **characterized in that** the resource attribute of the first resource comprises at least one of the followings:
the priority of the first resource, a reliability indication of the first resource, a service indication of the first resource, an indication of the logical channel that can be mapped onto the first resource, an indication of a MAC control element, CE, that can be mapped onto the first resource, physical uplink shared channel, PUSCH, duration corresponding to the first resource, modulation and coding scheme, MCS, level corresponding to the first resource, MCS list information corresponding to the first resource, modulation and coding scheme cell radio network temporary identifier, MCS-C-RNTI, corresponding to the first resource, the type of the first resource and the size of transmission block of the first resource.

4. The method of claim 3, **characterized in that** the type of the first resource comprises at least one of the followings:
CG type 1 resource, CG type 2 resource and DG resource, wherein the CG type 2 resource is a CG resource that still needs a downlink control information, DCI, indication to be able to be activated even after being configured.

5. A terminal device (600), comprising a processor (610) and a memory (620), wherein the memory (620) is configured to store a computer program, and the processor (610) is configured to call and run the computer program stored in the memory (620) to execute the method of any of claims 1 to 4.

## Patentansprüche

1. Verfahren zur drahtlosen Kommunikation, umfassend:
Bestimmen (S310) durch ein Endgerät (500), dass eine erste Ressource verfügbar ist; und,
wenn eine erste Bedingung erfüllt wird, Durchführen (S320) einer Media-Access-Control-Physical-Data-Unit-Paket-Erstellung, MAC-PDU-Paket-Erstellung, oder einer Informationsmultiplexierung an der ersten Ressource durch das Endgerät (500);
wobei die erste Ressource eine Configured-Grant-Ressource, CG-Ressource, oder eine Dynamic-Grant-Ressource, DG-Ressource, ist; wobei die erste Bedingung von einem Netzgerät angezeigt oder konfiguriert wird;
wobei die erste Bedingung darin besteht, dass keine Korrespondenz zwischen logischen Kanälen und Ressourcen konfiguriert ist,
wobei das Durchführen einer MAC-PDU-Paket-Erstellung oder einer Informationsmultiplexierung an der ersten Ressource durch das Endgerät (500) Folgendes umfasst:
Multiplexieren des logischen Kanals, der eine Logical-Channel-Prioritization-Zuordnungsbedingung, LCP-Zuordnungsbedingung, erfüllt, auf die erste Ressource durch das Endgerät (500); oder
Bestimmen durch das Endgerät (500), dass die erste Ressource zu ignorieren ist,
wobei die LCP-Zuordnungsbedingung mindestens eines von Folgendem enthält:
eine Liste zulässiger Unterträgerabstände, allowed SCS-List;
eine maximale Physical-Uplink-Shared-Channel-Dauer, maxPUSCH-Duration;
einen zulässigen CG-Typ 1; und
zulässige versorgende Zellen;
wobei eine CG-Typ-1-Ressource eine CG-Ressource ist, die aktiviert wird und auch durch Radio Resource Control, RRC, konfiguriert wird.

2. Verfahren nach Anspruch 1, **dadurch gekennzeichnet, dass** das Durchführen (S320) der MAC-PDU-Paket-Erstellung oder der Informationsmultiplexierung an der ersten Ressource durch das Endgerät (500) Folgendes umfasst:
basierend auf einem Quellattribut der ersten Ressource Durchführen der MAC-PDU-Paket-Erstellung oder der Informationsmultiplexierung an der ersten Ressource durch das Endgerät (500).

3. Verfahren nach einem der Ansprüche 1 bis 2, **dadurch gekennzeichnet, dass** das Ressourcenattribut der ersten Ressource mindestens eines von Folgendem umfasst:
die Priorität der ersten Ressource, eine Zuverlässigkeitsanzeige der ersten Ressource, eine Dienstanzeige der ersten Ressource, eine Anzeige des logischen Kanals, der der ersten Ressource zugeordnet werden kann, eine Anzeige eines MAC-Steuerelements, MAC-CE, das der ersten Ressource zugeordnet werden kann, eine Physical-Uplink-Shared-Channel-Dauer, PUSCH-Dauer, die mit der ersten Ressource korrespondiert, eine Modulations- und Codierschemastufe, MCS-Stufe, die mit der ersten Ressource korrespondiert, MCS-Listeninformationen, die mit der ersten Ressource korrespondieren, einen Cell Radio Network Temporary Identifier eines Modulations- und Codierschemas, MCS-C-RNTI, der mit der ersten Ressource korrespondiert, den Typ der ersten Ressource und die Größe eines Übertragungsblocks der ersten Ressource.

4. Verfahren nach Anspruch 3, **dadurch gekennzeichnet, dass** der Typ der ersten Ressource mindestens eines von Folgendem umfasst:
eine CG-Typ-1-Ressource, eine CG-Typ-2-Ressource oder eine DG-Ressource, wobei die CG-Typ-2-Ressource eine CG-Ressource ist, die weiterhin eine Anzeige von Downlink-Steuerinformationen, DCI, benötigt, um aktiviert werden zu können, auch wenn sie bereits konfiguriert worden ist.

5. Endgerät (600), das einen Prozessor (610) und einen Speicher (620) umfasst, wobei
der Speicher (620) konfiguriert ist, um ein Computerprogramm zu speichern, und der Prozessor (610) konfiguriert ist, um das in dem Speicher (620) gespeicherte Computerprogramm aufzurufen und abzuarbeiten, um das Verfahren nach einem der Ansprüche 1 bis 4 auszuführen.

## Revendications

1. Procédé de communication sans fil, comportant :
la détermination (S310), par un dispositif terminal (500), du fait qu'une première ressource est disponible ; et
lorsqu'une première condition est satisfaite, la réalisation (S320), par le dispositif terminal (500), d'un conditionnement d'unité physique de données, PDU, de commande d'accès au support, MAC, ou d'un multiplexage d'informations sur la première ressource, la première ressource étant une ressource d'attribution configurée, CG, ou une ressource d'attribution dynamique, DG ; la première condition étant indiquée ou configurée par un dispositif de réseau ;
la première condition étant qu'une correspondance entre des canaux logiques et des ressources ne soit pas configurée, la réalisation, par le dispositif terminal (500), d'un conditionnement de PDU de MAC ou d'un multiplexage d'informations sur la première ressource comportant :
le multiplexage, par le dispositif terminal (500), sur la première ressource, du canal logique qui satisfait une condition de mappage de priorisation de canaux logiques, LCP ; ou
la détermination, par le dispositif terminal (500), du fait qu'il convient d'ignorer la première ressource, la condition de mappage de LCP comprenant au moins une des suivantes :
liste d'espacements de sous-porteuses, SCS, autorisés ; durée maximum de canal physique partagé de liaison montante, PUSCH ;
type 1 de CG autorisé ; et
cellules de desserte autorisées, une ressource de CG de type 1 étant une ressource de CG qui est activée et aussi configurée par une gestion des ressources radioélectriques, RRC.

2. Procédé selon la revendication 1, **caractérisé en ce que** la réalisation (S320), par le dispositif terminal (500), du conditionnement de PDU de MAC ou du multiplexage d'informations sur la première ressource comporte :
d'après un attribut de source de la première ressource, la réalisation, par le dispositif terminal (500), du conditionnement de PDU de MAC ou du multiplexage d'informations sur la première ressource.

3. Procédé selon l'une quelconque des revendications 1 à 2, **caractérisé en ce que** l'attribut de ressource de la première ressource comporte au moins un des suivants :
la priorité de la première ressource, une indication de fiabilité de la première ressource, une indication de service de la première ressource, une indication du canal logique qui peut être associé à la première ressource, une indication d'un élément de commande, CE, de MAC qui peut être associé à la première ressource, une durée de canal physique partagé de liaison montante, PUSCH, correspondant à la première ressource, un niveau de schéma de modulation et de codage, MCS, correspondant à la première ressource, une information de liste de MCS correspondant à la première ressource, un identifiant temporaire de réseau radio de cellule de schéma de modulation et de codage, MCS-C-RNTI, correspondant à la première ressource, le type de la première ressource et la taille de bloc de transmission de la première ressource.

4. Procédé selon la revendication 3, **caractérisé en ce que** le type de la première ressource comporte au moins un des suivants :
ressource de CG type 1, ressource de CG type 2 et ressource de DG, la ressource de CG type 2 étant une ressource de CG qui nécessite encore une indication d'informations de commande de liaison descendante, DCI, pour pouvoir être activée même après avoir été configurée.

5. Dispositif terminal (600), comportant un processeur (610) et une mémoire (620), la mémoire (620) étant configurée pour conserver un programme informatique, et le processeur (610) étant configuré pour appeler et exécuter le programme informatique conservé dans la mémoire (620) pour exécuter le procédé selon l'une quelconque des revendications 1 à 4.
